# FASCICULE DE BREVET EUROPEEN

(11) **EP 3 843 359 B1**
(45) Date de publication et mention de la délivrance du brevet: **07.09.2022**
(21) Numéro de dépôt: 20216577.5
(22) Date de dépôt: 22.12.2020
(51) Int. Cl.: H04L 9/40, G01S 5/00

(54) **PROCÉDÉ D'ALLOCATION DYNAMIQUE DE RESSOURCES D'UN RÉSEAU IP POUR LA COMMUNICATION ENTRE APPLICATIONS EXÉCUTÉES DANS DES DOMAINES SÉCURISÉS ; SYSTÈME POUR LA MISE EN OEUVRE DU PROCÉDÉ**
VERFAHREN ZUR DYNAMISCHEN ZUWEISUNG VON RESSOURCEN EINES IP-NETZES FÜR DIE KOMMUNIKATION ZWISCHEN ANWENDUNGEN, DIE IN GESICHERTEN DOMÄNEN AUSGEFÜHRT WERDEN, SOWIE SYSTEM ZUR IMPLEMENTIERUNG DIESES VERFAHRENS
METHOD FOR DYNAMIC RESOURCE ALLOCATION OF AN IP NETWORK FOR COMMUNICATION BETWEEN APPLICATIONS EXECUTED IN SECURE DOMAINS; SYSTEM FOR IMPLEMENTING THE METHOD

(30) Priorité: 24.12.2019 FR 1915530
(43) Date de publication de la demande: 30.06.2021
(73) Titulaire: THALES, 92400 Courbevoie (FR)
(72) Inventeur: MONTENOT, Jean-Marc, 92622 GENNEVILLIERS CEDEX (FR); SCHOLLER, Franck, 92622 GENNEVILLIERS CEDEX (FR); DELATTRE, Michel, 92622 GENNEVILLIERS CEDEX (FR)
(74) Mandataire: Lavoix

(56) Documents cités:
- EP-A1- 3 499 970
- WO-A1-2018/114788
- US-A1- 2008 181 127
- US-A1- 2010 255 835

## Description

La présente invention a pour domaine celui des communications sécurisées.

Plus particulièrement, l'invention a pour domaine celui des procédés et des systèmes permettant d'allouer dynamiquement à un flux applicatif, certaines ressources d'un réseau de communication, lorsqu'il existe un cloisonnement fort entre ce réseau et le domaine source du flux applicatif.

Le document WO 2018/114788 A1 divulgue un réseau de communication augmenté d'une fonctionnalité d'allocation dynamique de ressources. Une demande d'allocation de ressources pour un flux applicatif généré par une application exécutée sur le domaine source est élaborée, sur le domaine source, puis transmise, du domaine source vers le réseau, à la fonctionnalité d'allocation dynamique de ressources.

Cependant, lorsque, pour des raisons de sécurité, le domaine source est isolé du réseau par un moyen de cloisonnement et de chiffrement, on se trouve dans l'impossibilité de transmettre la demande d'allocation de ressources à la fonctionnalité d'allocation dynamique de ressources du réseau.

La présente invention a donc pour but de résoudre ce problème, sans affaiblir le niveau de sécurité sur le domaine source, ni nuire à la communication entre l'application source du flux applicatif avec une application destinataire du flux applicatif.

Pour cela l'invention a pour objet un procédé d'allocation dynamique de ressources d'un réseau IP pour la communication entre au moins une application source exécutée dans un domaine source et au moins une application puits exécutée dans un domaine puits, le domaine source étant connecté au réseau IP au travers d'un moyen de cloisonnement et de chiffrement source et le domaine puits étant connecté au réseau IP au travers d'un moyen de cloisonnement et de chiffrement puits, le réseau IP disposant d'une fonctionnalité d'allocation dynamique de ressources pour les flux qu'il achemine, ledit procédé étant caractérisé en ce qu'il comporte les étapes successives de : génération d'un flux applicatif par ladite au moins une application source ; élaboration d'une consigne d'allocation de ressources pour un flux applicatif s'écoulant depuis l'application source vers l'application puits ; génération d'un sous-flux, les paquets IP du sous-flux étant caractéristiques tout en ayant un adressage similaire à un adressage des paquets du flux applicatif ; insertion des paquets IP du sous-flux dans le flux applicatif de manière à coder la consigne d'allocation de ressources dans un flux combiné ; chiffrement des paquets IP du flux combiné en utilisant le moyen de cloisonnement et de chiffrement source, pour obtenir un flux combiné chiffré ; analyse du flux combiné chiffré en aval du moyen de cloisonnement et de chiffrement source, de manière à décoder la consigne d'allocation de ressources ; transmission de la consigne d'allocation de ressources décodée vers la fonctionnalité d'allocation dynamique de ressources du réseau IP ; prise d'une décision d'allocation de ressources par la fonctionnalité d'allocation dynamique de ressources du réseau IP ; acheminement du flux combiné chiffré vers le moyen de cloisonnement et de chiffrement puits au travers du réseau IP, conformément à la décision d'allocation de ressources prise par la fonctionnalité d'allocation dynamique de ressources du réseau IP ; déchiffrement des paquets IP du flux combiné chiffré par le moyen de cloisonnement et de chiffrement puits, pour obtenir un flux combiné déchiffré ; séparation, dans le flux combiné déchiffré, du sous-flux et du flux applicatif ; et, réception du flux applicatif par ladite au moins une application puits.

Suivant des modes particuliers de réalisation, le procédé comporte une ou plusieurs des caractéristiques suivantes, prises isolément ou suivant toutes les combinaisons techniquement possibles :
- le procédé comporte en outre les étapes consistant à : détermination, par la fonctionnalité d'allocation dynamique de ressources du réseau IP, d'un paramètre de contrôle à partir de la décision d'allocation de ressources et de la consigne d'allocation de ressources ; avant déchiffrement des paquets IP du flux combiné chiffré, ordonnancement des paquets IP du sous-flux de manière à coder le paramètre de contrôle dans le flux combiné chiffré ; après déchiffrement des paquets IP du flux combiné chiffré, décodage du paramètre de contrôle ; communication sécurisée par les moyens de cloisonnement et de chiffrement puits et source du paramètre de contrôle dans un flux de contrôle s'écoulant depuis le domaine puits vers le domaine source ; adaptation du flux applicatif et/ou de la consigne d'allocation de ressources à partir du paramètre de contrôle.
- l'étape d'insertion s'effectue en contrôlant un débit et/ou un séquencement des paquets IP du sous-flux dans le flux combiné, le débit et/ou le séquencement étant indicatif d'au moins un attribut de la consigne en allocation de ressources.
- un attribut de la consigne en allocation de ressources correspond à une valeur de bande passante ou de latence.
- l'étape de génération d'un sous-flux consiste à générer une pluralité de paquets IP telle que chaque paquet IP comporte une partie de charge utile vide et une partie d'en-tête reprenant à l'identique la partie d'en-tête des paquets IP du flux applicatif.
- l'étape de chiffrement, respectivement de déchiffrement, est telle qu'un mécanisme d'anti-rejeu protège d'attaques en déni de service et place, dans les en-têtes des paquets IP des flux chiffrés, des éléments permettant un contrôle du séquencement des paquets IP sécurisés.
- les moyens de cloisonnement et de chiffrement source et puits mettent en œuvre pour leurs échanges mutuels un protocole d'échanges du type IPsec ou GDOI.
- l'étape de génération d'un flux applicatif consiste à associer, dans un macro-flux, des flux applicatifs élémentaires générés par différentes d'applications source élémentaires et ayant des caractéristiques d'adressage communes.

L'invention a également pour objet un système pour la mise en œuvre du procédé précédent.

De préférence le système comporte pour la communication entre au moins une application source exécutée dans un domaine source et au moins une application puits exécutée dans un domaine puits, le domaine source étant connecté au réseau IP au travers d'un moyen de cloisonnement et de chiffrement source et le domaine puits étant connecté au réseau IP au travers d'un moyen de cloisonnement et de chiffrement puits, le réseau IP disposant d'une fonctionnalité d'allocation dynamique de ressources pour les flux qu'il achemine, en amont du moyen de cloisonnement et de chiffrement source : un moyen d'analyse pour l'élaboration d'une consigne d'allocation de ressources pour un flux applicatif généré par ladite au moins une application source ; un moyen de génération pour générer un sous-flux ; un moyen de mélange pour insérer le sous-flux dans le flux applicatif, et, en aval du moyen de cloisonnement et de chiffrement source : moyen de décodage pour décoder la consigne d'allocation de ressources insérée dans le flux combiné chiffré et transmettre ladite consigne à la fonctionnalité d'allocation dynamique de ressources.

De préférence encore, le système comporte en outre : en amont du moyen de cloisonnement et de chiffrement puits : un moyen de mise en forme pour ordonnancer des paquets IP du sous-flux dans le flux combiné chiffré de manière à coder un paramètre de contrôle défini par la fonctionnalité d'allocation dynamique de ressources, et, en aval du moyen de cloisonnement et de chiffrement source : un moyen de décodage pour décoder le paramètre de contrôle inséré dans le flux combiné déchiffré en sortie du moyen de cloisonnement et de chiffrement puits, le paramètre de contrôle étant communiqué depuis le domaine puits jusqu'au domaine source, afin que le moyen d'analyse commande une régulation du flux applicatif par l'application source et/ou une mise à jour de la consigne d'allocation de ressources à partir du paramètre de contrôle reçu.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
- La figure 1 est une représentation schématique d'un mode de réalisation d'un système permettant la mise en œuvre d'un procédé selon l'invention ;
- La figure 2 est une représentation schématique d'un premier mode de réalisation du procédé selon l'invention ;
- La figure 3 est une représentation schématique d'un second mode de réalisation du procédé selon l'invention permettant d'améliorer le premier mode de réalisation de la figure 2 ; et,
- La figure 4 est une représentation schématique de flux en différents lieux du système de la figure 1 lors de la mise en œuvre du procédé selon l'invention.

### GENERALITE

L'invention consiste à générer un sous-flux constitué de paquets IP caractéristiques, et à mélanger le sous-flux avec le flux applicatif de manière à coder la demande d'allocation de ressources dans le flux combiné ainsi obtenu. Le flux combiné, après avoir traversé le moyen de cloisonnement et de chiffrement isolant le domaine source du réseau de communication, est analysé en entrant sur le réseau par un composant spécifique, de manière à décoder la demande d'allocation de ressources. Celle-ci peut alors être transmise pour exécution à la fonctionnalité d'allocation dynamique de ressources du réseau. Le flux combiné est acheminé vers le domaine destinataire en utilisant les ressources du réseau effectivement allouées. Une fois le flux combiné déchiffré par le moyen de cloisonnement et de chiffrement du domaine destinataire, les paquets IP du sous-flux sont séparés de ceux du flux applicatif, qui sont transmis à l'application destinataire.

Ainsi, en insérant des fonctions de codage et de décodage dans le chemin de données de part et d'autre du moyen de cloisonnement et de chiffrement, ces fonctions de codage et de décodage étant initialisées avec des règles communes, il est possible de faire transiter une information de requête en allocation de ressource et/ou un paramètre de contrôle des ressources effectivement allouées, du domaine vers le réseau ou inversement, en codant cette information dans le flux qui est concerné par l'allocation de ressources.

### SYSTEME

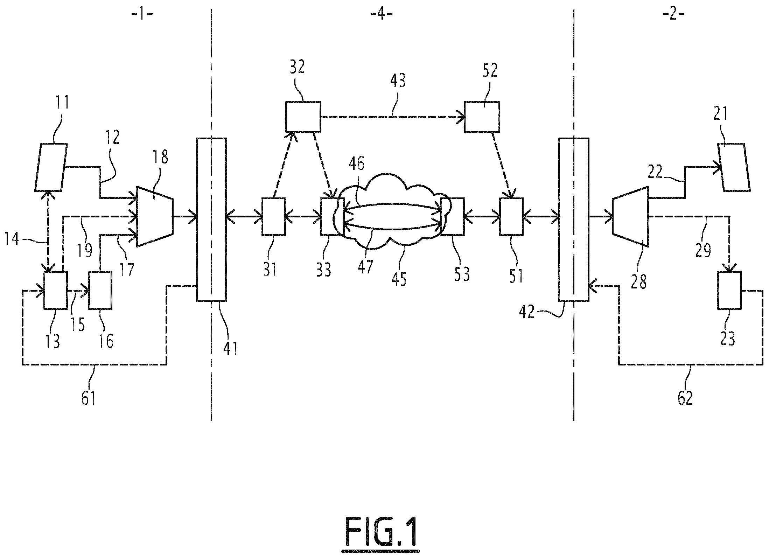

Le système pour la mise en œuvre du procédé selon l'invention est représenté à la figure 1.

Il comporte des premier et second domaines, respectivement 1 et 2, en communication bidirectionnelle l'un avec l'autre au travers d'une infrastructure réseau 4. Un domaine est par exemple un réseau local LAN (« Local Area Network » en anglais) , tandis que l'infrastructure réseau 4 est un réseau longue distance WAN (« Wide Area Network » en anglais)

Dans ce qui suit, sera plus particulièrement décrit le cas d'un échange initié du côté du premier domaine 1 (domaine source de l'information) et à destination du second domaine 2 (domaine puits de l'information). Par conséquent, les composants du système situés du côté du premier domaine 1 seront qualifiés de « source » et les composants du côté du second domaine 2 seront qualifiés de « puits ».

De plus, pour des raisons de clarté, les fonctionnalités du système seront présentées en relation avec le cheminement d'un flux descendant du premier domaine 1 vers le second domaine 2. En particulier, sur la figure 1, les liaisons entre composants fonctionnels sont représentées par des flèches orientées conformément à l'échange d'information qui s'opère lors de la mise en œuvre du procédé selon l'invention sur un tel flux descendant. Cependant, en variante, le système est symétrique pour la mise en œuvre du procédé sur un flux descendant, mais également sur un flux montant du second domaine 2 vers le premier domaine 1.

Pour garantir l'intégrité du domaine source 1, celui-ci est connecté à l'infrastructure réseau 4 au travers d'un moyen de cloisonnement et de chiffrement source. Cette barrière de sécurité prévue à la frontière entre le domaine source 1 et l'infrastructure réseau 4 est par exemple réalisée par un chiffreur source 41.

Le chiffreur source 41 a pour fonction de chiffrer les flux provenant du domaine source 1 et devant être transmis sur l'infrastructure réseau 4. Le chiffreur source 41 a pour fonction de déchiffrer les flux chiffrés provenant de l'infrastructure réseau 4.

De manière homologue, pour garantir l'intégrité du domaine puits 2, celui-ci est connecté à l'infrastructure réseau 4 au travers d'un moyen de cloisonnement et de chiffrement puits. Cette barrière de sécurité prévue à la frontière entre le domaine puits 2 et l'infrastructure réseau 4 est par exemple réalisée par un chiffreur puits 42.

Le chiffreur puits 42 a pour fonction de déchiffrer les flux chiffrés provenant de l'infrastructure réseau 4. Le chiffreur puits 42 a pour fonction de chiffrer les flux provenant du domaine puits 2 et devant être transmis sur l'infrastructure réseau 4.

Avantageusement, les chiffreurs source 41 et puits 42 mettent en œuvre un mécanisme d'anti-rejeu pour protéger les domaines qu'ils sécurisent d'attaques en déni de service. Ce mécanisme est fondé sur l'insertion, dans les en-têtes des paquets IP chiffrés au moment de leur chiffrage par un chiffreur homologue, d'éléments (tels que des étiquettes temporelles - « time stamps ») permettant un contrôle du séquencement des paquets IP chiffrés dans les flux sécurisés échangés entre ces chiffreurs sur l'infrastructure réseau 4. En observant ces éléments, le chiffreur récepteur du flux sécurisé peut éliminer les répliques d'un paquet IP déjà reçu.

Dans le domaine source 1, une application source 11 est exécutée. Elle est par exemple exécutée sur un ordinateur.

L'application source 11 cherche à communiquer, au travers l'infrastructure réseau 4, avec une application puits 21 exécutée, par exemple sur un serveur, à l'intérieur du domaine puits 2. Pour cela, l'application source 11 est propre à générer un flux applicatif constitué de paquets IP.

Un paquet IP comporte une partie d'en-tête (« header ») et une partie de charge utile (« payload »). La partie d'en-tête comporte notamment les informations d'adressage indiquant le destinataire du paquet IP, en l'occurrence l'application puits 21. La partie de charge utile comporte les données à transmettre au destinataire.

L'infrastructure réseau 4 est constituée par un réseau IP 45.

Le réseau IP 45 est par exemple une agrégation de plusieurs réseaux similaires, mais qui sont gérés par différents opérateurs et présentent diverses caractéristiques ; une agrégation de réseaux mettant en œuvre des technologies de transmission différentes (radio, filaire, etc.) ; des réseaux dédiés à certains types de flux (vidéo, voix sur IP, etc.) ; des réseaux à assurance de service ; et/ou des réseaux dont la configuration évolue au cours du temps (tels que des réseaux ad-hoc).

De manière connue, le réseau IP 45 est augmenté d'une fonctionnalité d'allocation dynamique de ressources permettant d'allouer à un flux devant transiter sur le réseau 45 une ou plusieurs ressources constitutives du réseau IP 45. L'allocation de ressources peut par exemple consister à attribuer un chemin particulier dans le réseau IP 45, à réserver une certaine bande passante pour le flux considéré le long de ce chemin, à paramétrer des fonctions virtuelles déterminant l'ordonnancement des flux par chaque élément d'aiguillage du réseau IP 45, etc.

De nombreuses manières d'implémenter cette fonctionnalité, qui est considérée comme faisant partie de l'état de la technique, sont envisageables par l'homme du métier.

Dans le mode de réalisation illustré par la figure 1, la fonctionnalité d'allocation dynamique de ressources est par exemple réalisée par un point de décision source 32 associé à un point d'exécution source 33, côté domaine source 1, et par un point de décision puits 52 associé à un point d'exécution puits 53, côté domaine puits 2.

En variante, les points de décision peuvent être distribués physiquement dans le réseau IP 45 et logiquement centralisés. Dans le cas où le réseau est constitué d'une fédération de réseaux élémentaires, les points de décision propres à chaque réseau élémentaire se coordonnent avantageusement avec les points de décision des réseaux élémentaires adjacents.

Un point de décision possède une vision globale des ressources constitutives du réseau IP 45 et de leur utilisation à chaque instant. Les points de décision sont en communication les uns avec les autres. Ainsi, le point de décision source 32 est en communication avec le point de décision puits 52 le long d'un canal 43.

Un point de décision est propre à prendre une décision d'allocation pour un flux devant transiter sur le réseau IP 45 à partir d'une consigne d'allocations de ressources associée audit flux.

Une consigne comporte un ou plusieurs attributs tels que par exemple le type du flux, le niveau de priorité du flux, la bande passante requise pour le flux, le temps de latence (c'est-à-dire un délai moyen), etc.

Une décision d'allocation est prise en temps réel. Elle peut évoluer au cours d'une session de communication entre l'application source et l'application puits.

Un point de décision est propre à transmettre à un point d'exécution la décision d'allocation de ressources prise pour un flux particulier.

Le point d'exécution, qui constitue une passerelle d'accès au réseau IP 45, est propre à exécuter une décision d'allocation en dirigeant le flux sur lequel porte une décision d'allocation de ressources, vers la ou les ressources du réseau IP 45 allouée(s) à ce flux par le point de décision.

Un point de décision est également propre à transmettre à des machines du réseau IP 45 la décision d'allocation de ressources prise pour un flux particulier pour prise en compte.

Selon l'invention, le domaine source 1 comporte un analyseur source 13, un générateur source 16 et un mélangeur source 18. De plus, sur l'infrastructure réseau 4, un point de mise en forme 31 est interposé entre le chiffreur source 41 et le point d'exécution source 33.

L'analyseur source 13 est en communication avec l'application source 11 le long d'un canal 14.

L'analyseur source 13 est notamment propre à élaborer une consigne d'allocation de ressources pour le flux applicatif généré par l'application source 11.

La consigne dépend d'informations collectées par l'analyseur source 13 via le canal 14 auprès de l'application source 11, telles que par exemple le type du flux applicatif (vidéo, voix, etc.), le niveau de priorité du flux applicatif (haute / basse), une bande passante optimale pour le flux, une latence, etc.

De plus, l'analyseur source 13 reçoit de l'application source 11, les informations d'adressage des paquets IP du flux applicatif. Par exemple, dans un mode de réalisation simple, il reçoit la partie d'en-tête des paquets IP du flux applicatif, comportant notamment l'adresse de l'application puits 21.

Le générateur source 16 est piloté par l'analyseur source 13 au travers d'un canal 15. Le générateur source 16 est propre à recevoir de l'analyseur source 13 différentes informations, dont notamment la partie d'en-tête des paquets IP du flux applicatif.

Le générateur source 16 est propre à générer un sous-flux de paquets IP.

Le sous-flux est constitué de paquets IP caractéristiques par rapport aux paquets IP du flux applicatif. Par exemple, la partie d'en-tête des paquets IP du sous-flux reprend à l'identique la partie d'en-tête des paquets IP du flux (de sorte que les paquets IP du flux et ceux du sous-flux présentent les mêmes informations d'adressage) ; la partie de charge utile des paquets IP du sous-flux est vide (elle ne comporte aucune donnée). Ainsi, les paquets IP du sous-flux sont caractérisés par une taille réduite par rapport aux paquets IP du flux applicatif.

Le mélangeur source 18 est propre à recevoir en entrée le flux applicatif généré par l'application source 11, le long d'une liaison 12, et le sous-flux généré par le générateur source 16, le long de la liaison 17.

De préférence, le mélangeur source 18 est capable de s'assurer que le flux applicatif est exempt de paquets IP caractéristiques du sous-flux. Cette capacité assure que des applications malveillantes ne puisse pas détourner le mécanisme mis en œuvre par la présente invention.

Le mélangeur source 18 est piloté par l'analyseur source 13 (directement via le canal 19 ou, en variante, à travers le générateur source 16) de manière à mélanger les paquets IP du sous-flux avec les paquets IP du flux applicatif afin de coder la consigne d'allocation de ressources dans le flux combiné produit en sortie du mélangeur source 18.

Par exemple, le débit des paquets IP du sous-flux dans le flux combiné est ajusté pour coder un attribut scalaire de la consigne, tel que par exemple une demande de bande passante. Par exemple, le séquencement des paquets IP du sous-flux dans le flux combiné est contrôlé pour coder un ou plusieurs autres attributs de la consigne, tels que par exemple le type de flux applicatif et le niveau de priorité du flux applicatif.

Par exemple, le mélangeur source 18 est un multiplexeur/démultiplexeur qui multiplexe le flux applicatif et le sous-flux pour obtenir le flux combiné.

En sortie du mélangeur source 18, le flux combiné est appliqué en entrée du chiffreur source 41.

Le chiffreur source 41 est propre à réaliser un chiffrement des paquets IP des flux qu'il reçoit. Le chiffreur source 41 chiffre en particulier le flux combiné qu'il reçoit du mélangeur source 18 pour délivrer un flux combiné chiffré. Chaque paquet IP du flux combiné est crypté, puis encapsulé avant d'être émis, sous la forme d'un paquet IP chiffré, sur l'infrastructure réseau 4.

Immédiatement en aval du chiffreur 41 lorsque l'on considère une communication descendante du domaine source 1 vers le domaine puits 2, l'infrastructure réseau 4 comporte un point de mise en forme source 31.

Ce composant a pour fonction d'analyser le flux combiné chiffré reçu du chiffreur source 41. En distinguant les paquets IP appartenant au sous-flux des paquets IP appartenant au flux applicatif, le point de mise en forme source 31 est capable de décoder la consigne d'allocation de ressources contenue dans le flux combiné chiffré.

Le point de mise en forme source 31 est propre à transmettre la consigne décodée associée au flux combiné chiffré au point de décision source 32.

En fonction de cette consigne et de l'état du réseau IP 45, le point de décision source 32 est capable de prendre une décision d'allocation de ressources afin d'acheminer le flux combiné chiffré vers le domaine puits 2.

Par exemple, parmi des première et seconde routes possibles 46 et 47 à travers le réseau IP, le point de décision source 32 décide d'allouer au flux combiné chiffré la route 46.

Cette décision est transmise pour exécution non seulement aux noeuds du réseau IP 45 mais également au point d'exécution source 33. Ce dernier, lorsqu'il reçoit le flux combiné chiffré du point de mise en forme source 31, est alors propre à le réémettre sur le réseau IP 45 pour qu'il soit acheminé de nœud en noeuds selon la route 46 jusqu'au point d'exécution puits 53.

De manière avantageuse, le point de décision source 32 est également capable de déterminer un paramètre de contrôle à partir de la décision d'allocation de ressources prise et de la consigne d'allocation de ressources. Des exemples de paramètre de contrôle seront donnés ci-dessous en relation avec la présentation du procédé selon l'invention. Le paramètre de contrôle est transmis au point de décision puits 52.

Selon l'invention, le domaine puits 2 comporte un séparateur puits 28 et un décodeur puits 23. Avantageusement, selon l'invention, l'infrastructure réseau 4 comporte en outre un point de mise en forme puits 51 (interposé entre le point d'exécution puits 53 et le chiffreur puits 42).

Le point d'exécution puits 53 est propre à recevoir le flux combiné chiffré et à le transmettre au point de mise en forme puits 51.

De manière avantageuse, le point de mise en forme puits 51 est capable de recevoir le paramètre de contrôle du point de décision puits 52. Le point de mise en forme puits 51 peut alors se caler sur le séquencement des paquets IP du flux combiné chiffré et réordonnancer le séquencement des paquets IP du sous-flux dans le flux combiné chiffré afin d'y coder le paramètre de contrôle. Pour cela le point 51 se fonde par exemple sur l'étiquetage des paquets IP sécurisés réalisé par le chiffreur source 41 dans le cadre du mécanisme d'anti-rejeu.

Le chiffreur puits 42 a pour fonction de déchiffrer les flux chiffrés provenant de l'infrastructure réseau 4. Lorsqu'il s'agit du flux combiné chiffré, le chiffreur 42 permet d'obtenir un flux combiné déchiffré correspondant au flux combiné. Le flux déchiffré est appliqué en entrée du mélangeur puits 28.

Sur un flux provenant du chiffreur puits 42, le séparateur puits 28 fonctionne de manière à séparer les paquets IP du sous-flux des paquets IP du flux applicatif. Le séparateur puits 28 est alors propre à transmettre le flux applicatif à l'application puits 21, le long de la liaison 22.

De manière avantageuse, le séparateur puits 28 est propre à extraire du flux combiné déchiffré une trame indicative du séquencement des paquets IP du sous-flux dans le flux combiné déchiffré et à transmettre cette trame au décodeur 23 via le canal 29.

Le décodeur 23 a pour fonction d'analyser cette trame afin de décoder le paramètre de contrôle.

Le décodeur 23 est alors propre à générer un flux de contrôle à destination de l'analyseur source 13 comportant le paramètre de contrôle. Le paramètre de contrôle est ainsi transmis, sur le domaine puits 2, du décodeur puits 23 vers le chiffreur puits 42 le long du canal 62, puis du domaine puits 2 vers le domaine source 1, et enfin, sur le domaine source 1, du chiffreur source 41 vers l'analyseur source 13, le long du canal 61.

### PROCEDE

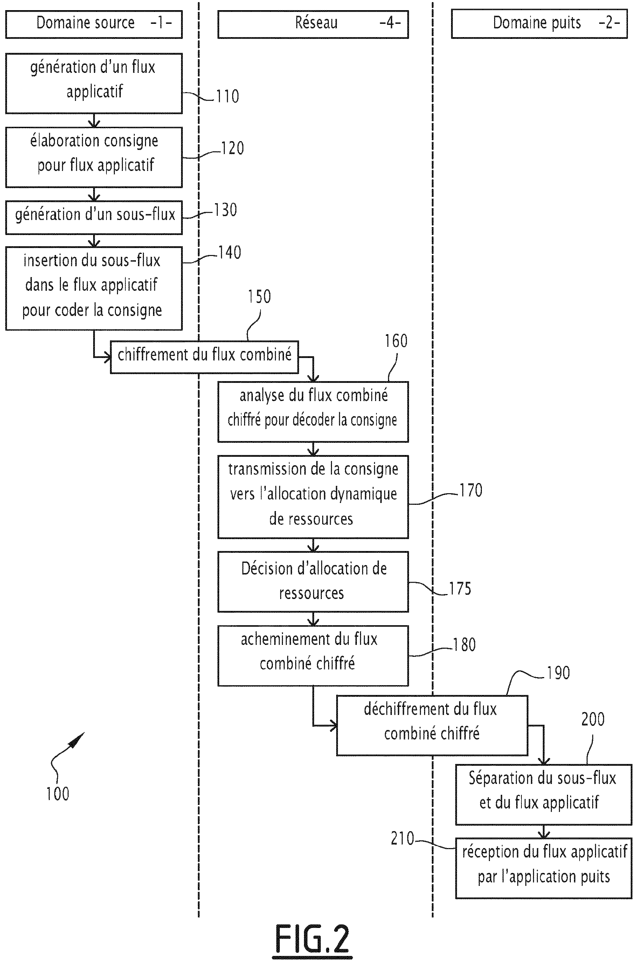

Un premier mode de réalisation du procédé d'allocation dynamique de ressources selon l'invention va maintenant être décrit en référence à la figure 2, pour le cas de la transmission d'un flux applicatif descendant, depuis le domaine source 1 jusqu'au domaine puits 2.

Le procédé 100 de la figure 2 est mis en œuvre lorsqu'une application source 11 cherche à transmettre un flux applicatif vers une application puits 21, tout en requérant, pour ledit flux applicatif, l'allocation de ressources réseaux particulières auprès de la fonctionnalité d'allocution de ressources dont est équipé l'infrastructure réseau 4 utilisé pour la transmission dudit flux applicatif.

A l'étape 110, l'application source 11 génère un flux applicatif constitué d'une séquence de paquets IP ayant pour destinataire l'application puits 21.

A l'étape 120, est élaboré une consigne d'allocation de ressources pour le flux applicatif. Cette étape, réalisée par l'analyseur source 13, résulte d'un échange d'informations entre l'application source 11 et l'analyseur source 13 : l'analyseur source 13 reçoit de l'application source 11 le type de données transmises par le flux applicatif, un niveau de priorité, etc. ; L'analyseur 13 reçoit de l'application source 11 la partie d'en-tête des paquets IP constitutifs du flux applicatif.

A l'étape 130, sur demande de l'analyseur source 13, le générateur source 16 est exécuté de manière à générer un sous-flux. Pour ce faire, le générateur 16 reçoit de l'analyseur source 13 la partie d'en-tête des paquets IP du flux applicatif. Les paquets IP du sous-flux comportent par exemple le même en-tête que les paquets IP du flux applicatif et une partie de charge utile vide. Les paquets IP du sous-flux sont donc caractéristiques dans leur longueur par rapport aux paquets IP du flux applicatif.

A l'étape 140, le mélangeur source 18, piloté par l'analyseur source 13, insère les paquets IP du sous-flux provenant du générateur source 16, dans la séquence des paquets IP du flux applicatif provenant de l'application source 11.

Le mélangeur source 18 insère les paquets IP du sous-flux de sorte que le débit des paquets IP sur une fenêtre de temps prédéfinie permette de coder un premier attribut de la consigne indiquée par l'analyseur source 13. Alternativement ou en plus, le mélangeur source 18 insère les paquets IP du sous-flux de sorte que l'ordonnancement des paquets IP parmi les paquets IP du flux combiné permette de coder au moins un second attribut de la consigne indiquée par l'analyseur source 13.

Le flux combiné délivré en sortie du mélangeur source 18 est appliqué en entrée du chiffreur source 41. A l'étape 150, le flux combiné est chiffré par le chiffreur source 41 de manière à obtenir un flux combiné chiffré propre à circuler sur l'infrastructure réseau 4.

En rentrant sur l'infrastructure réseau 4, le flux combiné chiffré est analysé par le point de mise en forme source 31. Ainsi, à l'étape 160, le point 31 analyse le flux combiné chiffré pour, en discernant les paquets IP (chiffrés) du sous-flux parmi les paquets IP (chiffrés) du flux applicatif, décoder le ou les attributs de la consigne passée dans le flux combiné chiffré.

A l'étape 170, le point de mise en forme source 31 transmet la consigne décodée vers le point de décision source 32, et retransmet le flux combiné chiffré vers le point d'exécution source 33.

A l'étape 175, en fonction de la consigne reçue et de la vision globale du réseau IP 45 qu'il possède à l'instant courant, le point de décision source 32 prend une décision d'allocation de ressources pour le flux combiné chiffré.

Une fois cette décision d'allocation prise, le point de décision source 32 la transmet notamment au point d'exécution source 33. Il la transmet également à différents nœuds du réseau IP 45, de manière à ce que les ressources contrôlées par ces nœuds soient réservées et/ou configurées pour exécuter la décision d'allocation de ressources.

Le point d'exécution source 33, sur la base de la décision d'allocation prise par le point de décision 32, réémet le flux combiné chiffré sur le réseau IP 45 vers les ressources allouées. Par exemple, si la décision consiste à router le flux combiné chiffré selon une route 46 particulière reliant le point d'exécution source 33 au point d'exécution puits 53, le point d'exécution source 33 réémet le flux combiné chiffré sur son port de sortie permettant d'attaquer la route 46.

A l'étape 180, le flux combiné chiffré est acheminé (à travers le réseau IP 45 sur la route 46 pour être reçu par le point d'exécution puits 53.

Celui-ci transmet le flux combiné chiffré vers le point de mise en forme puits 51. Dans ce premier mode de réalisation, le point de mise en forme puits 51 est essentiellement transparent et applique le flux combiné chiffré en entrée du chiffreur puits 42.

A l'étape 190, le chiffreur 42 déchiffre le flux combiné chiffré de manière à obtenir un flux combiné déchiffré. Celui-ci est appliqué en entrée du séparateur puits 28.

Dans une étape 200, le séparateur puits 28 sépare, dans le flux combiné déchiffré, les paquets IP du flux applicatif, des paquets IP du sous-flux.

Enfin, à l'étape 210, les paquets IP du flux applicatif sont reçus par l'application puits 21.

Ainsi, le codage d'une consigne d'allocation de ressources dans la structure même du flux de données émis sur le réseau de communication permet de passer une information à travers le moyen de cloisonnement et de chiffrement, qui isole le domaine source du réseau. L'analyse de ce flux en entrée du réseau permet d'extraire la consigne et de commander l'allocation dynamique de ressources.

Coté domaine puits, la suppression des paquets IP du sous-flux parmi les paquets IP reçus permet de retrouver les paquets du flux applicatif. Ainsi, le flux applicatif n'est pas altéré lors de la mise en œuvre du procédé selon l'invention.

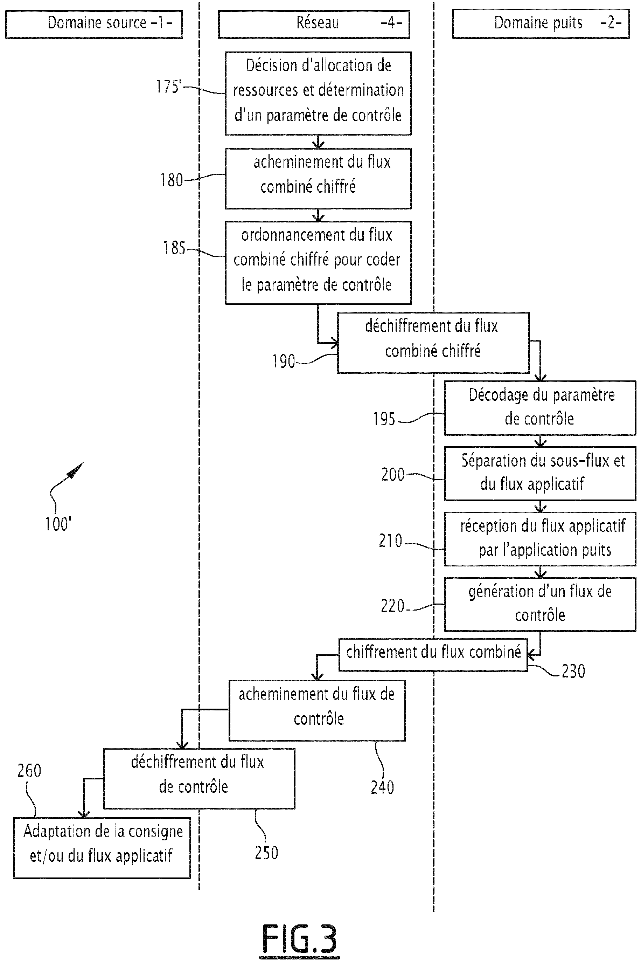

En se référant à la figure 3, un second mode de réalisation du procédé selon l'invention va être présenté. Ce second mode de réalisation est en fait une amélioration du premier mode présenté ci-dessus, qui permet de renvoyer un paramètre de contrôle vers le domaine source ayant émis la consigne d'allocation de ressources.

Le procédé 100' reprend à l'identique les étapes 110 à 180, à l'exception de l'étape 175 qui est modifiée. A l'étape 175', le point de décision source 32 non seulement prend une décision d'allocation de ressources, mais également détermine la valeur d'un paramètre de contrôle. Ce paramètre de contrôle est élaboré à partir de la comparaison entre la consigne (i.e. la demande de ressources) et la décision (i.e. les ressources effectivement allouées).

Le paramètre de contrôle correspond par exemple à une confirmation ou une infirmation de l'application de la consigne d'allocation de ressources.

Selon cet exemple, le paramètre de contrôle prend la valeur « OK » lorsque les ressources effectivement allouées correspondent à la demande et la valeur « NOK » lorsque les ressources effectivement allouées ne correspondent pas à la demande.

Ainsi, si le réseau IP 45 n'a pas les ressources nécessaires pour répondre à une demande d'allocation de ressource, le paramètre de contrôle prend la valeur « NOK ». Par exemple encore, alors que le réseau IP 45 avait précédemment alloué des ressources à un flux, suite à un évènement affectant le réseau IP 45 (rupture, baisse de capacité satellitaire, brouillage radio, ou autre) de sorte que ce dernier ne peut plus répondre à l'instant courant à la demande initiale d'allocation de ressource pour ledit flux, alors, le paramètre de contrôle prend la valeur « NOK ».

En variante, non seulement le paramètre de contrôle est émis lors d'une prise de décision d'allocation de ressources suite à la réception d'une consigne, mais également périodiquement tant que cette décision d'allocation de ressource n'est pas modifiée. Le paramètre de contrôle constitue alors un drapeau (« flag ») indicatif de l'état du réseau IP 45 vis-à-vis du flux correspondant.

Ce paramètre de contrôle est échangé entre les différents points de décision équipant l'infrastructure réseau 4, notamment entre le point de décision source 32 et le point de décision puits 52.

A la suite de l'étape 180, le procédé 100' comporte une étape 185, exécutée par le point de mise en forme puits 51, consistant à ordonnancer les paquets IP du flux combiné chiffré reçu du réseau IP 45.

Plus précisément, le point 52 transmet au point de mise en forme 51 le paramètre de contrôle.

Le point de mise en forme 51 réarrange le séquencement des parquets IP du sous-flux dans le flux combiné chiffré de manière à coder le paramètre de contrôle.

Le procédé 100' se poursuit par l'étape 190, réalisée par le chiffreur puits 42, de déchiffrement du flux combiné chiffré pour obtenir un flux combiné déchiffré.

Dans une étape 195, le flux combiné déchiffré est traité par le séparateur puits 28 de manière à obtenir une trame des séquences des paquets IP du sous-flux. Celle-ci est passé au décodeur puits 23 le long du canal 29.

Parallèlement ou simultanément, le séparateur puits 28 sépare (étape 200) les paquets IP du sous-flux et ceux du flux applicatif et transmet (étape 210) les paquets IP du flux applicatif vers l'application puits 21.

A l'étape 220, le décodeur puits 23 décode la valeur du paramètre de contrôle à partir de la trame reçue, et génère un flux de contrôle, adressé à l'analyseur source 13 et dont la charge utile comporte le paramètre de contrôle.

A l'étape 230, le flux de contrôle est chiffré par le chiffreur 42.

A l'étape 240, le flux de contrôle chiffré est transmis sur l'infrastructure réseau 4 depuis le domaine puits 2 jusqu'au domaine source 1.

A l'étape 250, le flux de contrôle chiffré est déchiffré par le chiffreur 41.

Le flux de contrôle déchiffré est finalement reçu par l'analyseur source 13, qui, dans une étape 260, communique avec l'application 11 de manière à ce que cette dernière régule le flux applicatif en fonction du paramètre de contrôle.

De préférence, suite à la régulation du flux applicatif, l'analyseur source 13 met à jour la consigne d'allocation de ressources, par exemple à partir du paramètre de contrôle et en tenant compte des nouvelles propriétés du flux applicatif.

Par exemple, si la valeur du paramètre de contrôle est « OK », la demande de bande passante est réévaluée à la hausse, et si la valeur du paramètre de contrôle est « NOK », la demande de bande passante est réévaluée à la baisse.

Dans ce second mode de réalisation, une boucle de rétroaction est établie permettant une adaptation de la consigne aux disponibilités du réseau.

Le point de mise en forme puits 51, et le décodeur puits 23 n'intervient que dans ce second mode de réalisation pour l'établissement d'une boucle de rétroaction.

Le point 51 est propre à discerner les paquets IP caractéristiques du sous-flux par rapport aux parquets IP du flux applicatif dans le flux combiné chiffré.

De préférence, le point de mise en forme puits 51 détecte et réordonne le séquencement des paquets IP du sous-flux en considérant les éléments de marquage du séquencement du flux combiné chiffré (tels que des étiquettes temporelles - « time stamps »). Cependant, dans un mode de réalisation simple, le codage du paramètre de contrôle s'effectue par l'ajustement, par le point 51, du débit modulé des paquets IP du sous-flux dans une fenêtre temporelle prédéfinie.

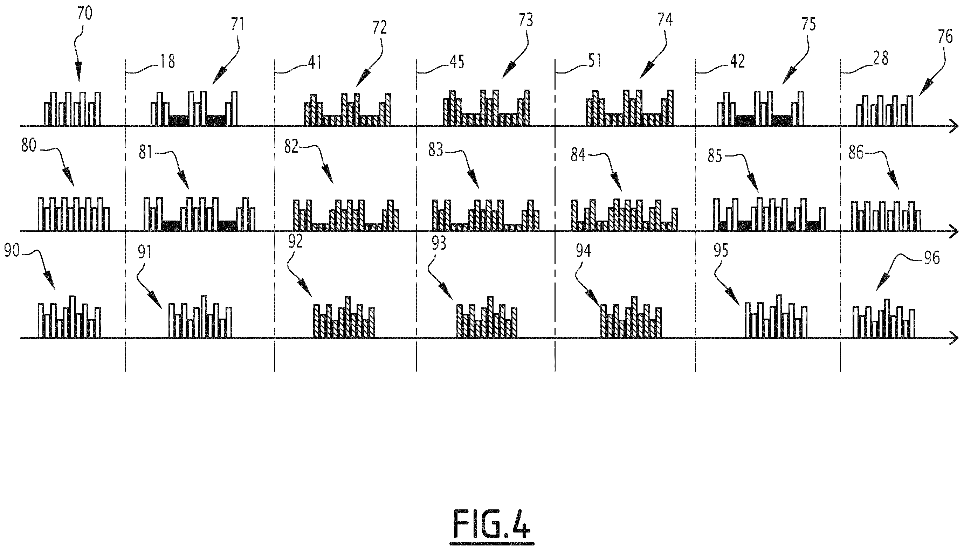

La figure 4 est une représentation schématique de l'évolution de la structure d'un flux lors de la mise en œuvre du procédé 100 pour la ligne supérieure, lors de la mise en œuvre du procédé 100' pour la ligne du milieu, et lorsque le procédé selon l'invention n'est pas mis en œuvre pour la ligne inférieure.

Considérant la ligne supérieure, un flux applicatif 70 est généré par l'application source 11.

Il est modifié à la traversé du mélangeur source 18 de manière à obtenir un flux combiné 71. Les paquets IP du flux applicatif sont mélangés avec les paquets IP du sous-flux. Les paquets IP du sous-flux sont caractéristiques en ce qu'ils présentent une taille réduite. Cette caractéristique permet de discerner entre les paquets IP du sous-flux et ceux du flux applicatif, même après chiffrement. Par exemple, la consigne est une demande d'allocation de bande passante. Il s'agit d'un attribut scalaire qui est codée dans la structure du flux combiné 71 en ajustant le débit des paquets IP du sous-flux dans le flux combiné 71.

Le flux combiné 71 est ensuite chiffré par le chiffreur 41 de manière à obtenir un flux combiné chiffré 72. Chaque paquet IP est crypté et encapsulé. Cependant, même après chiffrement, les paquets IP du sous-flux présentent une taille inférieure aux paquets du flux applicatif, de sorte que le point de mise en forme source 31 est capable de mesurer le débit des paquets IP du sous-flux et ainsi d'extraire la consigne.

Le flux combiné chiffré 72 est injecté dans le réseau IP 45.

Le flux combiné chiffré 73 qui émerge du réseau IP 45 correspond au flux combiné chiffré 72, éventuellement avec un séquencement temporel altéré par le réseau.

Le flux combiné chiffré 73 est appliqué en entrée du point de mise en forme puits 51. Dans le procédé 100, le point de mise en forme puits 51. Ainsi, le flux 74 transmis au chiffreur puits 42 correspond au flux combiné chiffré 73.

Le flux 74 est alors déchiffré par le chiffreur puits 42 de manière à obtenir un flux combiné déchiffré 75.

C'est alors au séparateur puits 28 de séparer les paquets IP du sous-flux des paquets IP du flux applicatif. Le flux applicatif 76 obtenu est transmis à l'application puits 21. Il correspond au flux applicatif 76 initialement généré par l'application source 11.

Considérant maintenant la ligne du milieu, un applicatif 80 est généré par l'application source 11.

Il est modifié à la traversé du mélangeur source 18 de manière à obtenir un flux combiné 81. Les paquets IP du flux applicatif sont mélangés avec les paquets IP du sous-flux de manière à coder la consigne d'allocation de ressources.

Le flux combiné 81 est chiffré en passant à travers le chiffreur 41 de manière à obtenir un flux combiné chiffré 82. Le point de mise en forme source 31 est propre à décoder le flux combiné chiffré 82 pour en extraire la consigne.

Le flux combiné chiffré 82 est injecté dans le réseau IP 45.

Le flux combiné chiffré 83 qui émerge de du réseau IP 45 correspond au flux combiné chiffré 82, éventuellement avec un séquencement temporel altéré par le réseau.

Le flux combiné chiffré 83 est appliqué en entrée du point de mise en forme puits 51. Dans le procédé 100', le point de mise en forme puits 51 ordonnance les paquets IP du sous-flux dans le flux combiné chiffré de manière à coder le paramètre de contrôle. Un flux combiné chiffré 84 est obtenu.

Le flux combiné chiffré 84 est déchiffré par le chiffreur puits 42 de manière à obtenir un flux combiné déchiffré 85.

Le séparateur puits 28 sépare les paquets IP du sous-flux des paquets IP du flux applicatif pour retrouver le flux applicatif 86, qui est alors transmis à l'application puits 21.

Le séparateur puits 28 permet également de décoder le paramètre de contrôle caché dans le flux combiné déchiffré 85.

Considérant finalement la ligne inférieure, une application source 11 génère un flux applicatif 90 à destination de l'application puits 21.

Puisqu'aucune consigne et/ou paramètre de contrôle n'altère le séquencement des paquets IP du flux, les flux 91 à la sortie du mélangeur source 18, 92 à la sortie du chiffreur source 41, 93 à la sortie du réseau IP 45, 94 à la sortie du point de mise en forme puits 51, 95 à la sortie du chiffreur puits 42, et 96 à la sortie du séparateur puits 28 présentent un séquencement identique à celui du flux 90 initial.

### VARIANTES et AVANTAGES

Le système de la figure 1 pour la mise en œuvre du procédé peut être modifié de nombreuses manières.

Les fonctions d'analyse pour la génération d'une consigne et de génération d'un sous-flux peuvent être combinées dans un même composant.

La fonctionnalité d'allocation dynamique de ressources peut avoir d'autres structures.

Dans une variante, l'infrastructure réseau est constituée d'une fédération de réseaux, c'est-à-dire d'une succession de réseaux entre le chiffreur source et le chiffreur puits. Cette fédération rassemble un réseau IP augmenté d'une fonctionnalité d'allocation dynamique de ressources (tel que le réseau IP 45) et d'un ou plusieurs réseaux intermédiaires, sur lesquels la fonctionnalité d'allocation dynamique de ressources n'opère pas. Le point de mise en forme source 31 décodant la consigne cachée dans le flux combiné chiffré est alors situé entre le chiffreur source 41 et le réseau IP 45, mais peut être séparé de l'un ou de l'autre de ces composants par un ou plusieurs réseaux intermédiaires. De même, le point de mise en forme puits 51 codant le paramètre de contrôle dans le flux combiné chiffré est situé entre le réseau IP 45 et le chiffreur puits 42, mais peut être séparé de l'un ou de l'autre de ces composants par un ou plusieurs réseaux intermédiaires.

Si la communication entre une unique application source et une unique application puits a été plus particulièrement présentée ci-dessus (puisqu'il s'agit là d'un cas simple permettant d'exposer clairement l'invention), le mécanisme présenté est facilement adaptable au cas d'une communication entre une application source et plusieurs applications puits (communication du type multicast), exécutées sur le même domaine puits ou sur des domaines puits différents.

Dans une variante, indépendante des précédentes, l'application source est en fait une application intermédiaire permettant, à partir d'une pluralité de flux applicatifs élémentaires générés par autant d'applications sources élémentaires, de générer au moins un macro-flux en tant que flux applicatif. Les paquets IP des flux applicatifs élémentaires devant être associés dans un même macro-flux sont étiquetés de manière adaptée. Par exemple, un champ supplémentaire (avantageusement le champ DSCP - « DiffServ Code Point » prévu par le protocole IP) identifiant le macro-flux est ajouté à l'en-tête des paquets IP des flux applicatifs élémentaires. Avantageusement, l'analyseur source exécute une règle d'élaboration de consigne adaptée à chaque macro-flux. Les flux élémentaires associés dans un macro-flux possèdent des caractéristiques d'adressage communes.

Les différentes fonctionnalités présentées (application, analyseur, codeur, mélangeur, chiffreur, mise en forme, déchiffreur, séparateur et décodeur, ainsi que les fonctionnalités d'allocations dynamique de ressources) sont de préférence réalisées sous forme logicielle : des ordinateurs, convenablement positionnés le long du chemin de données, mémorisent des programmes d'ordinateur dont les instructions, propres à être exécutées par les moyens de calcul desdits ordinateurs, permettent la mise en oeuvre de ces fonctionnalités et par conséquent du procédé selon l'invention.

Le procédé selon l'invention offre un mécanisme permettant de transmettre une requête d'allocation de ressources et éventuellement un paramètre de contrôle, en passant la barrière de sécurité isolant le domaine source du réseau.

Des applications envisageables dans la pratique sont par exemple :
- L'accélération TCP : des mandataires TCP (« proxies TCP ») sont déployés en tant qu'application source et application puits ; la vitesse de la numérotation des acquittements est asservie sur le paramètre de contrôle des allocations de ressources du réseau ; ceci permet un traitement du « n to 1 », c'est-à-dire n connexions TCP convergeant vers un site distant, avec une régulation rapide sans être pénalisée par le « round-trip time » - RTT du réseau.

- Déclenchement de tâches de fond et, plus généralement, asservissement de service métier sur les disponibilités du réseau : la forte disponibilité du réseau peut être signalée et utilisée.
- Préemption de ressources entre des applications source et puits caractérisées par des niveaux de sécurité différents : c'est alors le réseau qui coordonne la préemption.
- Les communications unifiées (visio, tableau blanc,...) où les temps de latence de chaque flux d'informations doivent être dans un même gabarit : dans ce cas le passage d'un attribut dans la requête d'allocation de ressources du côté application source permet de corréler plusieurs types de flux.
- Les communications discrètes selon la définition qui en est par exemple donnée par le document FR 1 873 571 : dans ce cas, le passage d'un attribut dans la requête d'allocation de ressources du côté application source permet de demander au réseau de passer dans un mode de transmission discret.

L'homme du métier constatera que le mécanisme venant d'être présenté permet de respecter la contrainte de cloisonnement fort entre les domaines source et puits, d'une part, et l'infrastructure réseau, d'autre part. Ce mécanisme respecte en effet la sécurisation des applications et le cloisonnement nécessaire pour contrer les menaces de cyber sécurité. En particulier, il garantit qu'aucune information extérieure ne soit transférée du réseau non sécurisé vers les domaines sécurisés, en particulier lors d'une attaque cyber. Il ne met pas en jeu un canal de communication caché et non maîtrisé à travers le moyen de cloisonnement et de chiffrement.

Le mécanisme selon l'invention autorise également une adaptabilité rapide, ce qui est rendu nécessaire (notamment en cas d'attaque cyber) par l'utilisation de ressources contraintes et à forte variabilité, ainsi que par une variabilité des informations à acheminer : il permet en effet un asservissement fin des besoins d'acheminement des applications avec les ressources disponibles du réseau, tout en indiquant ces besoins au réseau pour qu'il s'auto-organise de manière à répondre efficacement aux différentes demandes d'allocation de ressources.

L'homme du métier constatera également que l'ajout de paquets IP caractéristiques de par leur taille réduite, n'augmente le débit du flux de données que de manière marginale, typiquement de l'ordre du pourcent.

## Revendications

1. Procédé (100, 100') d'allocation dynamique de ressources d'un réseau IP (45) pour la communication entre au moins une application source (11) exécutée dans un domaine source (1) et au moins une application puits (21) exécutée dans un domaine puits (2), le domaine source étant connecté au réseau IP au travers d'un moyen de cloisonnement et de chiffrement source (41) et le domaine puits étant connecté au réseau IP au travers d'un moyen de cloisonnement et de chiffrement puits (42), le réseau IP disposant d'une fonctionnalité d'allocation dynamique de ressources (32, 33, 52, 53) pour les flux qu'il achemine, ledit procédé étant **caractérisé en ce qu'**il comporte les étapes successives de :
- génération (110) d'un flux applicatif par ladite au moins une application source (11) ;
- élaboration (120) d'une consigne d'allocation de ressources pour un flux applicatif s'écoulant depuis l'application source vers l'application puits ;
- génération (130) d'un sous-flux, les paquets IP du sous-flux étant caractéristiques tout en ayant un adressage similaire à un adressage des paquets du flux applicatif ;
- insertion (140) des paquets IP du sous-flux dans le flux applicatif de manière à coder la consigne d'allocation de ressources dans un flux combiné ;
- chiffrement (150) des paquets IP du flux combiné en utilisant le moyen de cloisonnement et de chiffrement source, pour obtenir un flux combiné chiffré ;
- analyse (160) du flux combiné chiffré en aval du moyen de cloisonnement et de chiffrement source, de manière à décoder la consigne d'allocation de ressources ;
- transmission (170) de la consigne d'allocation de ressources décodée vers la fonctionnalité d'allocation dynamique de ressources du réseau IP ;
- prise (175) d'une décision d'allocation de ressources par la fonctionnalité d'allocation dynamique de ressources du réseau IP ;
- acheminement (180) du flux combiné chiffré vers le moyen de cloisonnement et de chiffrement puits au travers du réseau IP, conformément à la décision d'allocation de ressources prise par la fonctionnalité d'allocation dynamique de ressources du réseau IP ;
- déchiffrement (190) des paquets IP du flux combiné chiffré par le moyen de cloisonnement et de chiffrement puits, pour obtenir un flux combiné déchiffré ;
- séparation (200), dans le flux combiné déchiffré, du sous-flux et du flux applicatif ; et,
- réception (210) du flux applicatif par ladite au moins une application puits.

2. Procédé (100') selon la revendication 1, comportant les étapes consistant à :
- détermination (175'), par la fonctionnalité d'allocation dynamique de ressources du réseau IP, d'un paramètre de contrôle à partir de la décision d'allocation de ressources et de la consigne d'allocation de ressources ;
- avant déchiffrement des paquets IP du flux combiné chiffré, ordonnancement (185) des paquets IP du sous-flux de manière à coder le paramètre de contrôle dans le flux combiné chiffré ;
- après déchiffrement des paquets IP du flux combiné chiffré, décodage (195) du paramètre de contrôle ;
- communication (220, 230, 240, 250) sécurisée par les moyens de cloisonnement et de chiffrement puits et source du paramètre de contrôle dans un flux de contrôle s'écoulant depuis le domaine puits vers le domaine source ;
- adaptation (260) du flux applicatif et/ou de la consigne d'allocation de ressources à partir du paramètre de contrôle.

3. Procédé selon l'une quelconque des revendications 1 à 2, dans lequel l'étape d'insertion (140) s'effectue en contrôlant un débit et/ou un séquencement des paquets IP du sous-flux dans le flux combiné, le débit et/ou le séquencement étant indicatif d'au moins un attribut de la consigne en allocation de ressources.

4. Procédé selon l'une quelconque des revendications 1 à 3, dans lequel un attribut de la consigne en allocation de ressources correspond à une valeur de bande passante ou de latence.

5. Procédé selon l'une quelconque des revendications 1 à 4, dans lequel l'étape de génération (130) d'un sous-flux consiste à générer une pluralité de paquets IP telle que chaque paquet IP comporte une partie de charge utile vide et une partie d'en-tête reprenant à l'identique la partie d'en-tête des paquets IP du flux applicatif.

6. Procédé selon l'une quelconque des revendications 1 à 5, dans lequel l'étape de chiffrement (150), respectivement de déchiffrement (190), est telle qu'un mécanisme d'anti-rejeu protège d'attaques en déni de service et place, dans les en-têtes des paquets IP des flux chiffrés, des éléments permettant un contrôle du séquencement des paquets IP sécurisés.

7. Procédé selon la revendication 6, dans lequel les moyens de cloisonnement et de chiffrement source (41) et puits (42) mettent en œuvre pour leurs échanges mutuels un protocole d'échanges du type IPsec ou GDOI.

8. Procédé selon l'une quelconque des revendications 1 à 7, dans lequel, l'étape de génération d'un flux applicatif consiste à associer, dans un macro-flux, des flux applicatifs élémentaires générés par différentes d'applications source élémentaires et ayant des caractéristiques d'adressage communes.

9. Système **caractérisé en ce qu'**il est adapté pour la mise en œuvre du procédé selon l'une quelconque des revendications 1 à 8.

10. Système selon la revendication 9, comportant, pour la communication entre au moins une application source (11) exécutée dans un domaine source (1) et au moins une application puits (21) exécutée dans un domaine puits (2), le domaine source étant connecté au réseau IP au travers d'un moyen de cloisonnement et de chiffrement source (41) et le domaine puits étant connecté au réseau IP au travers d'un moyen de cloisonnement et de chiffrement puits (42), le réseau IP disposant d'une fonctionnalité d'allocation dynamique de ressources (32, 33, 52, 53) pour les flux qu'il achemine, en amont du moyen de cloisonnement et de chiffrement source (41) :
- un moyen d'analyse (13) pour l'élaboration d'une consigne d'allocation de ressources pour un flux applicatif généré par ladite au moins une application source ;
- un moyen de génération (16) pour générer un sous-flux ;
- un moyen de mélange (18) pour insérer le sous-flux dans le flux applicatif,
et, en aval du moyen de cloisonnement et de chiffrement source (41) :
- moyen de décodage (31) pour décoder la consigne d'allocation de ressources insérée dans le flux combiné chiffré et transmettre ladite consigne à la fonctionnalité d'allocation dynamique de ressources.

11. Système selon la revendication 10, comportant en outre :
en amont du moyen de cloisonnement et de chiffrement puits (42) :
- un moyen de mise en forme (51) pour ordonnancer des paquets IP du sous-flux dans le flux combiné chiffré de manière à coder un paramètre de contrôle défini par la fonctionnalité d'allocation dynamique de ressources,
et, en aval du moyen de cloisonnement et de chiffrement source (42) :
- un moyen de décodage (28, 23) pour décoder le paramètre de contrôle inséré dans le flux combiné déchiffré en sortie du moyen de cloisonnement et de chiffrement puits (42), le paramètre de contrôle étant communiqué depuis le domaine puits (2) jusqu'au domaine source (1), afin que le moyen d'analyse (13) commande une régulation du flux applicatif par l'application source et/ou une mise à jour de la consigne d'allocation de ressources à partir du paramètre de contrôle reçu.

## Patentansprüche

1. Verfahren (100, 100') zur dynamischen Zuweisung von Ressourcen eines IP-Netzwerks (45) für die Kommunikation zwischen mindestens einer Quellanwendung (11), die in einer Quelldomäne (1) ausgeführt wird, und mindestens einer Brunnenanwendung (21), die in einer Brunnendomäne (2) ausgeführt wird, wobei die Quelldomäne über eine Quellpartitionierungs- und -verschlüsselungseinrichtung (41) mit dem IP-Netzwerk verbunden ist und die Brunnendomäne über eine Brunnenpartitionierungs- und -verschlüsselungseinrichtung (42) mit dem IP-Netzwerk verbunden ist, wobei das IP-Netzwerk über eine Funktion zur dynamischen Ressourcenzuweisung (32, 33, 52, 53) für die von ihm geleiteten Flüsse verfügt, wobei das Verfahren **dadurch gekennzeichnet ist, dass** es die folgenden aufeinanderfolgenden Schritte umfasst:
- Erzeugen (110) eines Anwendungsstroms durch die mindestens eine Quellanwendung (11);
- Erstellen (120) einer Ressourcenzuweisungsvorgabe für einen Anwendungsstrom, der von der Quellanwendung zu der Brunnenanwendung fließt;
- Erzeugen (130) eines Teilstroms, wobei die IP-Pakete des Teilstroms charakteristisch sind, während sie eine Adressierung aufweisen, die einer Adressierung der Pakete des Anwendungsstroms ähnlich ist;
- Einfügen (140) der IP-Pakete des Teilstroms in den Anwendungsstrom, um die Ressourcenzuweisungsvorgabe in einen kombinierten Strom zu kodieren;
- Verschlüsseln (150) der IP-Pakete des kombinierten Stroms unter Verwendung der Quellpartitionierungs- und -verschlüsselungseinrichtung, um einen verschlüsselten kombinierten Strom zu erlangen;
- Analysieren (160) des verschlüsselten kombinierten Stroms stromabwärts von der Quellpartitionierungs- und -verschlüsselungseinrichtung, um die Ressourcenzuweisungsvorgabe zu entschlüsseln;
- Übertragen (170) der decodierten Ressourcenzuweisungsvorgabe an die dynamische Ressourcenzuweisungsfunktion des IP-Netzwerks;
- Treffen (175) einer Ressourcenzuweisungsentscheidung durch die dynamische Ressourcenzuweisungsfunktion des IP-Netzwerks;
- Weiterleiten (180) des verschlüsselten kombinierten Stroms zu der Brunnenpartitionierungs- und -verschlüsselungseinrichtung durch das IP-Netzwerk gemäß der Ressourcenzuweisungsentscheidung, die von der dynamischen Ressourcenzuweisungsfunktion des IP-Netzwerks getroffen wird;
- Entschlüsseln (190) der IP-Pakete des kombinierten Stroms, der durch die Brunnenpartitionierungs- und -verschlüsselungseinrichtung verschlüsselt wurde, um einen entschlüsselten kombinierten Strom zu erlangen;
- Trennen (200), in dem entschlüsselten kombinierten Strom, des Teilstroms und des Anwendungsstroms; und
- Empfangen (210) des Anwendungsstroms durch die mindestens eine Brunnenanwendung.

2. Verfahren (100') nach Anspruch 1, umfassend die Schritte, die aus Folgendem bestehen:
- Bestimmen (175'), durch die dynamische Ressourcenzuweisungsfunktion des IP-Netzwerks, eines Steuerparameters aus der Ressourcenzuweisungsentscheidung und dem Ressourcenzuweisungssollwert;
- vor einem Entschlüsseln der IP-Pakete des verschlüsselten kombinierten Stroms, Ordnen (185) der IP-Pakete des Teilstroms, um den Prüfparameter in dem verschlüsselten kombinierten Strom zu kodieren;
- nach Entschlüsseln der IP-Pakete des verschlüsselten kombinierten Stroms, Decodieren (195) des Steuerparameters;
- Kommunikation (220, 230, 240, 250), die durch die Brunnen- und Quellenpartionierungs- und Verschlüsselungseinrichtung abgesichert ist, des Steuerparameters in einem Kontrollfluss, der von der Brunnen- zu der Quellendomäne fließt;
- Anpassen (260) des Anwendungsstroms und/oder der Ressourcenzuweisungsvorgabe anhand des Steuerungsparameters.

3. Verfahren nach einem der Ansprüche 1 bis 2, wobei der Einfügungsschritt (140) durch Steuern einer Rate und/oder einer Sequenzierung der IP-Pakete des Teilstroms in einem kombinierten Strom erfolgt, wobei die Rate und/oder die Sequenzierung mindestens ein Attribut der Ressourcenzuweisungsvorgabe angibt.

4. Verfahren nach einem der Ansprüche 1 bis 3, wobei ein Attribut der Ressourcenzuweisungsvorgabe einem Bandbreiten- oder Latenzwert entspricht.

5. Verfahren nach einem der Ansprüche 1 bis 4, wobei der Schritt eines Erzeugens (130) eines Teilstroms darin besteht, eine Vielzahl von IP-Paketen zu erzeugen, sodass jedes IP-Paket einen leeren Nutzlastteil und einen Kopfteil umfasst, der den Kopfteil der IP-Pakete des Anwendungsstroms identisch übernimmt.

6. Verfahren nach einem der Ansprüche 1 bis 5, wobei der Schritt eines Verschlüsselns (150) bzw. Entschlüsselns (190) derart ist, dass ein Anti-Replay-Mechanismus vor Denial-of-Service-Angriffen schützt und in den Kopfzeilen der IP-Pakete der verschlüsselten Ströme Elemente platziert, die eine Steuerung der Sequenzierung der gesicherten IP-Pakete ermöglichen.

7. Verfahren nach Anspruch 6, wobei die Quell- (41) und Brunnen- (42) partionierungs- und verschlüsselungseinrichtungen für ihren gegenseitigen Austausch ein Austauschprotokoll vom Typ IPsec oder GDOI implementieren.

8. Verfahren nach einem der Ansprüche 1 bis 7, wobei der Schritt eines Erzeugens eines Anwendungsstroms darin besteht, in einem Makrofluss elementare Anwendungsströme, die von verschiedenen elementaren Quellanwendungen erzeugt werden und gemeinsame Adressierungsmerkmale aufweisen, zu assoziieren.

9. System, **dadurch gekennzeichnet, dass** es für die Durchführung des Verfahrens nach einem der Ansprüche 1 bis 8 geeignet ist.

10. System nach Anspruch 9, umfassend für die Kommunikation zwischen mindestens einer Quellanwendung (11), die in einer Quelldomäne (1) ausgeführt wird, und mindestens einer Brunnenanwendung (21), die in einer Brunnendomäne (2) ausgeführt wird, dass die Quelldomäne über eine Quellpartitionierung und - verschlüsselungseinrichtung (41) mit dem IP-Netzwerk verbunden ist und die Brunnendomäne über eine Brunnenpartitionierungs- und -verschlüsselungeinrichtung (42) mit dem IP-Netzwerk verbunden ist, wobei das IP-Netzwerk über eine Funktion zur dynamischen Zuweisung von Ressourcen (32, 33, 52, 53) für die von ihm geleiteten Ströme verfügt, die der Quellpartitionierungs und -verschlüsselungseinrichtung (41) vorgeschaltet ist:
- eine Analyseeinrichtung (13) zum Erstellen einer Ressourcenzuweisungsvorgabe für einen Anwendungsstrom, der von der mindestens einen Quellanwendung erzeugt wird;
- eine Erzeugungseinrichtung (16) zum Erzeugen eines Teilstroms;
- eine Mischeinrichtung (18) zum Einfügen des Teilstroms in den Anwendungsstrom, und stromabwärts von der Quellpartitionierungs- und -verschlüsselungseinrichtung (41):
- Decodiereinrichtungen (31) zum Decodieren der in den verschlüsselten kombinierten Strom eingefügten Ressourcenzuweisungsvorgabe und zum Übertragen der Anweisung an die dynamische Ressourcenzuweisungsfunktion.

11. Verfahren nach Anspruch 10, ferner umfassend:
stromaufwärts von der Brunnenpartitionierungs- und -verschlüsselungseinrichtung (42):
- eine Formatierungseinrichtung (51) zum Ordnen von IP-Paketen des Teilstroms in den verschlüsselten kombinierten Strom, um einen Steuerparameter zu codieren, der durch die Funktion der dynamischen Ressourcenzuweisung definiert ist,
und stromabwärts von der Quellpartitionierungs- und -verschlüsselungseinrichtung (42):
- eine Decodiereinrichtung (28, 23) zum Decodieren des Steuerparameters, der in den entschlüsselten kombinierten Fluss am Ausgang der Brunnenpartitionierungs- und - verschlüsselungseinrichtung (42) eingefügt ist, wobei der Steuerparameter von der Brunnendomäne (2) zu der Quellendomäne (1) kommuniziert wird, damit die Analyseeinrichtung (13) eine Regulierung des Anwendungsstroms durch die Quellanwendung und/oder eine Aktualisierung der Ressourcenzuweisungsvorgabe anhand des empfangenen Steuerparameters steuert.

## Claims

1. A method (100, 100') of dynamically allocating resources of an IP network (45) for communication between at least one source application (11) running in a source domain (1) and at least one sink application (21) running in a sink domain (2), the source domain being connected to the IP network via a source partitioning and encryption means (41) and the sink domain being connected to the IP network via a sink partitioning and encryption means (42), the IP network having a dynamic resource allocation functionality (32, 33, 52, 53) for the streams that it carries, said method being **characterised in that** it comprises the successive steps of:
- generating (110) an application stream by the at least one source application (11);
- creating (120) a resource allocation instruction for an application stream from the source application to the sink application;
- generating (130) a sub-stream, the IP packets of the sub-stream being characteristic while having addressing similar to an addressing of the packets of the application stream;
- inserting (140) the IP packets of the sub-stream into the application stream so as to encode the resource allocation instruction into a combined stream;
- encrypting (150) the IP packets of the combined stream using the source partitioning and encryption means, to obtain an encrypted combined stream;
- analysing (160) the combined encrypted stream downstream of the source partitioning and encryption means, so as to decode the resource allocation instruction;
- transmitting (170) the decoded resource allocation instruction to the dynamic resource allocation functionality of the IP network;
- making (175) a resource allocation decision, by the dynamic resource allocation functionality of the IP network;
- routing (180) the encrypted combined stream to the sink partitioning and encryption means through the IP network, according to the resource allocation decision made by the dynamic resource allocation functionality of the IP network;
- decrypting (190) the IP packets of the encrypted combined stream by the sink partitioning and encryption means, to obtain a decrypted combined stream;
- separating (200), in the decrypted combined stream, the sub-stream and the application stream; and
- receiving (210) the application stream by the at least one sink application.

2. The method (100') according to claim 1, comprising the steps of:
- determining (175'), by the dynamic resource allocation functionality of the IP network, a control parameter from the resource allocation decision and the resource allocation instruction;
- before decrypting the IP packets of the encrypted combined stream, scheduling (185) the IP packets of the sub-stream so as to encode the control parameter into the encrypted combined stream;
- after decrypting the IP packets of the encrypted combined stream, decoding (195) the control parameter;
- communication (220, 230, 240, 250) secured by the sink and source partitioning and encryption means of the control parameter in a control stream from the sink domain to the source domain;
- adaptation (260) of the application stream and/or the resource allocation instruction from the control parameter.

3. The method according to any one of claims 1 to 2, wherein the step of inserting (140) is performed by monitoring a throughput and/or a sequencing of the IP packets of the sub-stream in the combined stream, the throughput and/or sequencing being indicative of at least one attribute of the resource allocation instruction.

4. The method according to any one of claims 1 to 3, wherein an attribute of the resource allocation instruction corresponds to a bandwidth or latency value.

5. The method according to any one of claims 1 to 4, wherein the step of generating (130) a sub-stream consists of generating a plurality of IP packets such that each IP packet comprises an empty payload portion and a header portion identically repeating the header portion of the IP packets of the application stream.

6. The method according to any one of claims 1 to 5, wherein the step of encrypting (150), respectively decrypting (190), is such that an anti-replay mechanism protects against denial of service attacks and places, in the headers of the IP packets of the encrypted streams, elements allowing a control of the sequencing of the secured IP packets.

7. The method according to claim 6, wherein the source (41) and sink (42) partitioning and encryption means implement for their mutual exchanges an exchange protocol of the IPsec or GDOI type.

8. The method according to any one of claims 1 to 7, wherein the step of generating an application stream consists of associating, in a macro stream, elementary application streams generated by different elementary source applications and having common addressing characteristics.

9. The system **characterised in that** it is adapted to implement the method according to any one of claims 1 to 8.

10. A system according to claim 9 comprising, for communication between at least one source application (11) running in a source domain (1) and at least one sink application (21) running in a sink domain (2), the source domain being connected to the IP network via a source partitioning and encryption means (41) and the sink domain being connected to the IP network via a sink partitioning and encryption means (42), the IP network having a dynamic resource allocation functionality (32, 33, 52, 53) for the streams that it carries, upstream of the source partitioning and encryption means (41).
- an analysis means (13) for creating a resource allocation instruction for an application stream generated by said at least one source application;
- generating means (16) for generating a sub-stream;
- mixing means (18) for inserting the sub-stream into the application stream,
and, downstream of the source partitioning and encryption means (41):
- decoding means (31) for decoding the resource allocation instruction inserted into the encrypted combined stream and transmitting said instruction to the dynamic resource allocation functionality.

11. The system according to claim 10, further comprising:
upstream of the sink partitioning and encryption means (42):
- shaping means (51) for scheduling IP packets of the sub-stream in the encrypted combined stream so as to encode a control parameter defined by the dynamic resource allocation functionality,
and, downstream of the source partitioning and encryption means (42):
- decoding means (28, 23) for decoding the control parameter inserted into the decrypted combined stream at the output of the sink partitioning and encryption means (42), the control parameter being communicated from the sink domain (2) to the source domain (1), so that the analysis means (13) controls a regulation of the application stream by the source application and/or an update of the resource allocation instruction from the received control parameter.
